# EUROPÄISCHE PATENTSCHRIFT

(11) **EP 3 558 668 B1**
(45) Veröffentlichungstag und Bekanntmachung des Hinweises auf die Patenterteilung: **19.05.2021**
(21) Anmeldenummer: 17826435.4
(22) Anmeldetag: 04.12.2017
(51) Int. Cl.: B32B 17/10, C03B 23/023, C03C 3/087, C03C 3/093, C03B 18/02, C03C 21/00

(54) **VERBUNDGLASSCHEIBE**
COMPOSITE GLASS PANE
VITRE EN VERRE FEUILLETÉ

(30) Priorität: 22.12.2016 DE 102016125488
(43) Veröffentlichungstag der Anmeldung: 30.10.2019
(73) Patentinhaber: SCHOTT AG, 55122 Mainz (DE)
(72) Erfinder: ALKEMPER, Jochen, 55270 Klein-Winternheim (DE); KLIPPE, Lutz, 65185 Wiesbaden (DE); DIETRICH, Rüdiger, 07745 Jena (DE)
(74) Vertreter: Blumbach · Zinngrebe Patentanwälte PartG mbB
(86) Internationale Anmeldenummer: PCT/EP2017/081380
(87) Internationale Veröffentlichungsnummer: WO 2018/114307

(56) Entgegenhaltungen:
- EP-A1- 3 144 141
- WO-A1-2015/084902
- WO-A1-2016/196546
- US-A1- 2012 094 084
- US-A1- 2015 140 301
- US-A1- 2015 314 571

## Beschreibung

### Gebiet der Erfindung

Die Erfindung betrifft Verbundsicherheitsgläser sowie Gläser, welche für die Verwendung in einem Verbundsicherheitsglas geeignet sind.

### Hintergrund der Erfindung

Verbundsicherheitsgläser sind bereits seit vielen Jahren Stand der Technik. Es handelt sich dabei um einen Verbund aus mindestens zwei Glasscheiben, zwischen welchen sich eine Folie befindet. Im Falle einer äußeren Krafteinwirkung auf den Scheibenverbund bewirkt der spezielle Aufbau von Verbundsicherheitsgläsern, dass einzelne oder alle Scheiben zwar zu Bruch gehen dürfen, der Scheibenverbund jedoch der äußeren Krafteinwirkung derart widersteht dass Gegenstände nicht hindurchtreten und in einigen Anwendungsfällen auch alle entstehenden Glassplitter an die Folie gebunden sind. In diesem Fall ist die Verletzungsgefahr für hinter der Scheibe befindliche Personen durch fliegende Glassplitter gering. Es gibt auch Verbundsicherheitsgläser in Automobilen, die zum Beispiel einer Krafteinwirkung aus dem Fahrgastraum heraus elastisch widerstehen stehen können. Dies ist vor allem erforderlich, wenn zum Beispiel der Airbag zündet oder wenn die Scheibe verhindern soll, dass Personen aus dem Fahrzeug herausgeschleudert werden. In beiden Fällen weist das Verbundsicherheitsglas einen elastischen Widerstand auf. Im Fall des Aufpralls von Personen von innen gegen die Verbundsicherheitsglasscheibe wird durch deren elastischen Widerstand verhindert, dass der Aufprall keine größere Gefahr für den Insassen darstellt als das Herausgeschleudertwerden. Gegenüber herkömmlichen Glasscheiben erhöht Verbundsicherheitsglas die Widerstandsfähigkeit gegenüber Gewalteinwirkung und vermindert die Verletzungsgefahr bei Glasbruch.

Der genaue Aufbau kann je nach Einsatzzweck variieren.

Beispielsweise beschreibt die deutsche Offenlegungsschrift DE 1 555 014 eine mehrschichtig aufgebaute Fahrzeugscheibe wie beispielsweise eine Windschutzscheibe. Die in den Innenraum des Fahrzeugs weisende Scheibe besitzt Druckspannung in der Oberflächenschicht und ist höchstens so dick ausgebildet wie die äußere Scheibe. Innere und äußere Scheibe sind durch eine durchscheinende Kunststoffzwischenschicht aus Polyvinylbutyral (PVB) getrennt. Durch die Druckspannungen in ihrer Oberflächenschicht ist die innere Scheibe biegsamer und bruchfester als die äußere Scheibe, wenn ein Gegenstand von außen auf das Fenster prallt. Die Offenlegungsschrift DE 1 555 014 beschreibt darüber hinaus, dass eine solche Druckspannung durch chemisches Vorspannen erzeugt werden kann.

Als äußere Scheibe wird hierbei eine Scheibe bezeichnet, welche im bestimmungsgemäßen Gebrauch, vorliegend also beispielsweise als Windschutzscheibe eines Automobils oder in vergleichbaren Anwendungen, außen angeordnet ist, also außerhalb der Fahrgastkabine. Eine innere Scheibe ist im bestimmungsgemäßen Gebrauch dem Fahrgastraum zugewandt.

Die internationale Patentanmeldung WO 2014/052229 A1 beschreibt ein Laminat aus einem ersten dünnen Glas, welches chemisch vorgespannt ist und bei welchem die Druckspannung zwischen 250 MPa und 350 MPa beträgt und die Dicke der Druckspannungsschicht mehr als 60 µm beträgt, einem zweiten Glas sowie mindestens einer zwischen den beiden Glasscheiben angeordneten Polymerlage. Weiterhin wird ein Verfahren zur chemischen Vorspannung beschrieben, mit welchem ein Glas wie vorstehend beschrieben erhalten werden kann.

Die internationale Patentanmeldung WO 2015/006201 A1 beschreibt einen Verbund, bei welchem eine erste äußere Glasscheibe nicht chemisch vorgespannt vorliegt, eine zweite, innere Scheibe hingegen chemisch vorgespannt wurde. Die innere Scheibe, welche chemisch vorgespannt wurde, weist eine Dicke zwischen 0,5 mm und 1,5 mm auf. Die äußere Scheibe weist eine größere Dicke zwischen 1,5 mm und 3,0 mm auf.

Die internationale Patentanmeldung WO 2014/209861 A1 beschreibt ebenfalls einen Verbund, welcher zwei Glaslagen umfasst sowie eine zwischen diesen angeordnete Lage eines Polymers. Eine der Scheiben ist aus einem dünnen Glas ausgebildet, welches chemisch vorgespannt wurde und eine Druckspannung zwischen 250 MPa und 350 MPa sowie eine Dicke der Druckspannungsschicht von mehr als 60 µm aufweist.

Ein Glaslaminat, welches eine polymerische Zwischenschicht umfasst, die auf einer ersten Oberfläche einer chemisch vorgespannten Glasscheibe aufgebracht ist, beschreibt die internationale Patentanmeldung WO 2012/051038 A1. Die erste Glasscheibe weist eine Dicke von weniger als 2 mm sowie eine oberflächennahe Schicht auf, welche unter einer Druckspannung von mehr als 300 MPa steht. Die Dicke dieser oberflächennahen, unter Druckspannung stehenden Schicht weist eine Dicke von mindestens 65-0,06*CS auf, wobei CS für den Wert der Druckspannung in der oberflächennahen Schicht steht. Beide Glasscheiben des Verbundes sind annähernd gleich dick.

Ein Glasverbund umfassend eine äußere Scheibe mit einer Dicke von höchstens 1,5 mm mit einer anderen chemischen Zusammensetzung als eine innere Scheibe offenbart die internationale Patentanmeldung WO 2015/059407 A1. Aufgrund der unterschiedlichen chemischen Zusammensetzung der inneren und der äußeren Scheibe besteht ein Unterschied im Verlauf der Viskosität über die Temperatur für die beiden Scheiben, wobei die Viskositäten der inneren und der äußeren Scheibe aufeinander abgestimmt sind.
Wiederum ein Verbundglas beschreibt die internationale Patentanmeldung WO 2015/058885 A1. Dieses umfasst mindestens eine chemisch vorgespannte Scheibe mit einer Dicke von kleiner oder gleich 2,1 mm sowie eine Zwischenschicht. Die Zwischenschicht ist in der Form ausgebildet, dass sie eine thermoplastische Verbindungsschicht sowie eine thermoplastische Trägerschicht umfasst, wobei die thermoplastische Trägerschicht wiederum eine funktionelle Beschichtung oder funktionellen Einlagerungen aufweist.

In der US-amerikanischen Patentanmeldung US 2015/0251377 A1 wird ein Laminat aus Glas beschrieben, bei welchem ein nicht vorgespanntes Außenglas verwendet wird, welches eine Dicke zwischen 1,5 mm und 3 mm aufweist, sowie ein chemisch vorgespanntes Innenglas mit einer Dicke zwischen 0,3 mm und 1,5 mm sowie eine keilförmig ausgebildete polymerische Zwischenfolie.

Die internationale Patentanmeldung WO 2015/158464 A1 beschreibt ein Fahrzeug-Verbundglas mit einer Innenscheibe, welche eine Dicke zwischen 0,1 mm und 0,4 mm aufweist, sowie eine Außenscheibe zwischen 1,0 mm und 1,8 mm Dicke. Die Dicke der inneren Glasscheibe beträgt höchstens 25% der Dicke der Außenscheibe.

Weiterhin beschreibt die internationale Patentanmeldung WO 2015/168529 A1 ein Laminat, bei welchem mindestens eine der beiden Glasscheiben aus einem Aluminosilikatglas einer bestimmten Zusammensetzung aufgebaut ist. Derartige Gläser können beispielsweise vorgespannt werden, indem Na gegen K ausgetauscht wird. Wird dies in einem Prozesschritt getan, werden hohe CS-Werte und geringe DoL-Werte erreicht, wie sie auch in den Beispielen der hier betrachteten internationalen Anmeldung der Fall ist. Dies ist nur für begrenzte Anwendungen tatsächlich von Vorteil. Hierbei bezeichnet CS die "compressive stress" oder Druckspannung. DoL ist die Abkürzung für "Depth of Layer" und bezeichnet die Dicke der Druckspannungszone. Im Rahmen der vorliegenden Erfindung werden die Begriffe "CS", "compressive stress" und Druckspannung sowie die Begriffe "Depth of Layer", "DoL" und Druckspannungszone (bzw. Dicke der Druckspannungszone) synonym verwendet.

Schließlich beschreibt die japanische Patentanmeldung JP 2016/008161 A ein Glaslaminat mit einer ersten äußeren Glasscheibe, welche höchstens 2 mm dick ist und als chemisch vorgespanntes Aluminosilikatglas einer bestimmten Zusammensetzung vorliegt. Alle genannten Zusammensetzungen führen zu einem E-Modul von maximal 73 GPa sowie bei einem chemischen Vorspannen mit KNO₃ zu hohen CS-Werten und relativ geringer DoL.

US2015140301 A1 lehrt Verbundglasscheiben, wobei die beiden Glasscheiben nicht dicker als 1.5 mm sind und die Polymer-Zwischenschicht vorzugsweise eine Dicke von 0.76-0.81 mm hat. Die Gehalte der Gläser an Li2O, Na2O und Al2O3 in Gew.% sind 0-8 Li2O, 0-21 Na2O und 8-24 Al2O3.

Allen vorgenannten Verbundglasscheiben liegt die zentrale Aufgabe zugrunde, zum einen im Falle eines Glasbruchs, beispielsweise aufgrund einer mechanischen Einwirkung, möglichst ein Bruchbild des Glases zu bewirken, bei welcher Verletzungen weitgehend verhindert werden und zum anderen die Fähigkeit zu besitzen, die Wucht des Aufpralls stumpfer Körper in einem hohen Maße elastisch aufzunehmen. Gleichzeitig ist, gerade im Bereich der Automobilverglasung, zunehmend auch die Reduktion des Gewichts solcher Verbundglasscheiben adressiert. Dieses Ziel darf jedoch nicht auf Kosten der geforderten mechanischen Eigenschaften gehen. Auch ist beachtlich, dass beispielsweise Windschutzscheiben für automobile Anwendungen in der Regel gewölbt ausgebildet sind. Dies bedeutet, dass die einzelnen Scheiben einer solchen Verbundglasscheibe von der Form her möglichst gut aneinander angepasst sein müssen, um das Laminieren zu ermöglichen. Eine optimale Anpassung der beiden Formen der Scheiben würde sich dann ergeben, wenn beispielsweise beide Glasscheiben gleichzeitig verformt würden oder zumindest unter denselben Bedingungen, insbesondere also auch auf denselben Fertigungsaggregaten, verformt würden. Dies ist allerdings aufgrund stark unterschiedlicher Viskositätsverläufe der aus dem Stand der Technik bekannten verwendeten Gläser in der Regel nicht möglich. In den wenigen Fällen, in denen solche Gläser ausgewählt werden, die gleichzeitig verformt werden können, wird dies durch Nachteile bei der Steifigkeit bzw. den Parametern CS und DoL und/oder. einem aufwändigen meist mehrstufigen Prozess der Verfestigung erkauft.

Nachteilig ist darüber hinaus, dass insbesondere bei der thermischen Verformung der am häufigsten als chemisch vorspannbare Gläser herkömmlich verwendeten Aluminosilikatgläser sehr hohe Temperaturen notwendig sind. Wenn diese Gläser dann traditionell mit KNO₃ chemisch hoch vorgespannt werden, um an der Oberfläche eine hohe Kratzfestigkeit zu erzielen, kommt es beim Auftreffen kleiner spitzer Körper (z.B. Straßenschotter) schnell zu einem sehr feinkrümeligen Bruchbild. Dieses feinkrümelige Bruchbild behindert im Bruchfall im Fahrzeug sehr stark die Durchsicht und erhöht außerdem die Gefahr, dass sich kleine Splitter lösen, mit der Folge, dass sich die Verletzungsgefahr für Fahrzeuginsassen erhöht. Für eine hohe Verwindungssteifigkeit eines solchen Glasverbundes als Autoscheibe ist weiterhin ein höherer E-Modul des Glases wünschenswert, als ihn Aluminosilikatgläser bieten können.

Es besteht daher Bedarf an der Bereitstellung einer einfach herzustellenden Verbundglasscheibe, welche eine hohe Verwindungssteifigkeit aufweist, eine hochfeste Oberfläche besitzt, eine Krafteinwirkung durch auftreffende Gegenstände auch elastisch aufnehmen kann und gleichzeitig eine gute Durchsicht auch in beschädigtem Zustand gewährleistet.

### Aufgabe der Erfindung

Die Aufgabe der Erfindung besteht in der Bereitstellung einer Verbundglasscheibe, welche ein Glas umfasst, das die einfache Herstellung der Verbundglasscheibe mit den gewünschten Eigenschaften gestattet.

### Zusammenfassung der Erfindung

Die Aufgabe der Erfindung wird gelöst durch den Gegenstand des Anspruchs 1. Bevorzugte Ausführungen und Weiterbildungen finden sich in den abhängigen Ansprüchen.

Die erfindungsgemäße Verbundglasscheibe umfasst eine erste Scheibe.

Als Verbundglas oder Verbundglasscheibe wird hierbei ein Aufbau bezeichnet, welcher mindestens zwei Lagen, beispielsweise zwei Lagen aus Glas, umfasst, die so miteinander verbunden sind, dass ein schichtartig aufgebauter Körper, insbesondere ein mindestens dreischichtig aufgebauter Körper, resultiert. Dies bedeutet im Sinne der vorliegenden Erfindung insbesondere, dass die Zusammensetzung des Körpers in Richtung seiner Dicke variiert, wobei in der Regel an den Grenzflächen, wo die einzelnen Lagen aneinanderstoßen, eine sprunghafte Änderungen der physikalischen und chemischen Eigenschaften erfolgt. Im Rahmen der vorliegenden Erfindung wird ein solcher schichtartig aufgebauter Körper, beispielsweise ein dreischichtiger Körper, auch als Laminat bezeichnet. Die Verbundglasscheibe kann also auch als Glaslaminat oder Laminat bezeichnet werden.

Im Sinne der vorliegenden Erfindung wird unter einer Scheibe ein Formkörper verstanden, welcher in einer Raumrichtung eine Ausdehnung aufweist, die mindestens eine Größenordnung geringer ist als in den beiden anderen Raumrichtungen. Synonym zum Begriff der "Scheibe" werden solche Formkörper auch als Platten oder - sofern eine Raumrichtung eine besonders große Ausdehnung aufweist - auch als Bänder bezeichnet. Die eine Raumrichtung, in welcher die Ausdehnung des scheibenförmigen Körpers mindestens eine Größenordnung geringer ist als in den beiden anderen Raumrichtungen, wird dabei im Rahmen der vorliegenden Erfindung auch als Dicke bezeichnet.

Weiterhin umfasst die erfindungsgemäße Verbundglasscheibe eine polymerisch ausgebildete Lage.

Unter einem Polymer wird ein Stoff verstanden, welcher sogenannte Makromoleküle, insbesondere organische Makromoleküle, umfasst. Beispielhaft kann ein solcher Stoff ein Kunststoff sein, also neben organischen Makromolekülen weitere Bestandteile, beispielsweise Zuschlagsstoffe und/oder Additive, umfassen.

Die polymerisch ausgebildete Lage der vorliegenden Erfindung kann beispielsweise in Form einer oder mehrerer Folienlagen vorliegen. Es ist allerdings auch möglich, dass die polymerisch ausgebildete Lage in situ auf einer der beiden Glas umfassenden Scheiben gebildet wird. Beispielsweise ist es möglich, Monomere, welche durch Vernetzungsreaktionen polymerisieren, auf eine Glasscheibe aufzubringen. Auf diese Weise können die Eigenschaften der polymerischen Lage in Abhängigkeit von den genauen Reaktionsbedingungen gezielt eingestellt werden.

Bevorzugt umfasst die polymerische Lage einen thermoplastischen Kunststoff, also einen Kunststoff, der bei Temperaturerhöhung in einem bestimmten Temperaturbereich plastisch verformbar wird, wobei dieser Vorgang reversibel ist, also bei einer Erniedrigung der Temperatur unterhalb einer Erweichungstemperatur, welche von der genauen Art des jeweiligen Kunststoffs abhängig ist, der Kunststoff wieder fest wird. Wenn die polymerische Lage mehrere Folienlagen umfasst, dann kann dieser Aufbau verschiedene Eigenschaften aufweisen. Ein mehrlagiger Aufbau kann zum Beispiel der Geräuschdämmung dienen. Ein ein- oder auch mehrlagiger Aufbau kann bestimmte Strahlungsanteile des durch den Laminatverbund hindurchtretenden Sonnenlichts absorbieren bzw. an seiner Oberfläche reflektieren. Die Funktionalität der polymerischen Lage ist also nicht auf die Erreichung mechanischer Eigenschaften des Laminatverbunds(Sicherheitsglasfunktion) beschränkt, sondern kann auch optische und/oder schallschluckende Eigenschaften zusätzlich aufweisen.

Besonders bevorzugt umfasst der Kunststoff Polyvinylbutyral (PVB) oder Ethylenvinylacetat (EVA). Weiterhin oder alternativ kann der Kunststoff auch PET oder PE umfassen.

Die Dicke der polymerisch ausgebildeten Lage liegt zwischen mindestens 0,5 mm und höchstens 1,7 mm.

Weiterhin umfasst die Verbundglasscheibe gemäß der vorliegenden Erfindung eine zweite Scheibe. Diese weist eine Dicke zwischen mindestens 0,3 mm und höchstens 1,5 mm und umfasst ein Lithium-Aluminium-Silikatglas.

Die polymerisch ausgebildete Lage ist zwischen der ersten und der zweiten Scheibe angeordnet und verbindet die beiden Scheiben miteinander.

Die Glaszusammensetzungen der ersten und der zweiten Scheibe sind so aufeinander abgestimmt, dass sich die Temperaturen, bei welchen die beiden Gläser der ersten und der zweiten Scheibe im Viskositätsbereich zwischen 10⁷ dPas und 10¹⁰ dPas die gleiche Viskosität aufweisen, voneinander nur um maximal 50°C, bevorzugt um maximal 30°C, besonders bevorzugt um maximal 20°C und ganz besonders bevorzugt um maximal 10°C voneinander unterscheiden.

Beachtlich ist also der geringe Temperaturunterschied bei den Temperaturen gleicher Viskosität für die betrachteten Scheiben. Beispielsweise beträgt die Temperatur, bei welcher die Viskosität der beiden Scheiben einen Wert von 10^{7,6} dPas aufweist, bei der zweiten Scheibe ca. 880°C. Die Temperatur, bei welcher die erste Scheibe eine Viskosität von 10^{7,6} dPas aufweist, beträgt nun mindestens 830°C und höchstens 930 °C, bevorzugt mindestens 850°C und höchstens 910°C, besonders bevorzugt mindestens 860°C und höchstens 900°C und ganz besonders bevorzugt mindestens 870°C und höchstens 890°C.

Bei dem hier adressierten Viskositätsbereich handelt es sich um den Bereich, bei welchem eine Verformung eines Glases möglich ist, beispielsweise unter Einfluss der Schwerkraft. Indem die Glaszusammensetzungen der ersten und der zweiten Scheibe aufeinander so abgestimmt sind, dass in diesem hier betrachteten Viskositätsbereich die Temperaturen gleicher Viskosität lediglich um einen geringen Betrag voneinander abweichen, ist es daher möglich, beispielsweise beide Scheiben zeitgleich zu verformen oder zumindest die Scheiben zwar nicht zeitgleich, aber unter Verwendung derselben apparativen Gegebenheiten, beispielsweise also unter Nutzung derselben Fertigungsaggregate, zu verformen.

Die Herstellung einer solchen Verbundglasscheibe ist somit im Vergleich zur Herstellung von Verbundglasscheiben des Standes der Technik wesentliche kosteneffizienter durchführbar. Weiterhin ist durch die Verwendung eines Lithium-Aluminium-Silikatglases als zweiter Scheibe auch sichergestellt, dass ein Glas mit hoher Transmission im optischen Wellenlängenbereich verwendet wird. Mit der erfindungsgemäßen Verbundglasscheibe ist somit zum einen eine sehr gute Transmission, somit also auch die Durchsicht durch die Scheibe hindurch, sichergestellt. Zum anderen wird durch die Verwendung einer sehr dünnen zweiten Scheibe auch das Gewicht der resultierenden Verbundglasscheibe gering gehalten. Schließlich ist durch die Möglichkeit, sowohl die zweite als auch die erste Scheibe auf demselben Produktionsaggregat, beispielsweise sogar im selben Schritt, umzuformen, auch eine erheblich kostengünstigere Herstellung der Verbundglasscheibe im Vergleich zu den Verbundglasscheiben des Standes der Technik eröffnet.

Gemäß einer Ausführungsform der Erfindung weist das Lithium-Aluminium-Silikatglas einen E-Modul von zumindest 80 GPa, vorzugsweise mindestens 82 GPa, besonders bevorzugt mindestens 84 GPa, auf. Ein hoher E-Modul hat eine höhere Steifigkeit der Scheibe zur Folge, was insbesondere bei Verwendung von dünneren Scheiben angezeigt ist, da die Verwindungssteifigkeit mit geringerer Dicke abnimmt. Eine Obergrenze für den E-Modul von Gläsern kann bei ca. 95 GPa angenommen werden.

Gemäß einer Ausführungsform der Erfindung liegt die zweite Scheibe als chemisch vorgespannte Scheibe vor. Eine solche chemische Vorspannung kann erhalten werden durch einen Prozess, bei welchem eine Glasscheibe bei einer Temperatur unterhalb der Transformationstemperatur T_{g} des Glases in eine Salzschmelze, beispielsweise eine Schmelze aus Kaliumnitrat und/oder Natriumnitrat, eingetaucht wird. Je nach der genauen Zusammensetzung findet bei einem solchen Prozess ein Austauschen der im Glas enthaltenen Alkaliionen mit den Ionen der Salzschmelze statt, beispielsweise der Austausch von Lithium- und/oder Natrium-Ionen aus dem Glas gegen Kalium- und/oder Natrium-Ionen der Salzschmelze. Auf diese Weise werden an der Oberfläche der Glasscheibe Oberflächendruckspannungen erzeugt. Im Englischen wird hierfür auch der Begriff "compressive stress", kurz "CS" verwendet. Beachtlich ist weiterhin auch die Tiefe der Oberflächendruckspannungszone. Im Englischen wird auch der Begriff "Depth of Layer" oder "DoL" verwendet. In dieser Druckspannungszone sind Lithium-Ionen zumindest teilweise durch andere Alkali-Ionen ersetzt.

Gemäß einer bevorzugten Ausführungsform der Erfindung liegt die zweite Scheibe als chemisch vorgespannte Scheibe vor, wobei die Druckspannungszone eine Tiefe von mindestens 40 µm Dicke aufweist und die Druckspannung mindestens 150 MPa und maximal 900 MPa beträgt.

Gemäß einer weiteren Ausführungsform der Erfindung beträgt die Druckspannung maximal 800 MPa, bevorzugt maximal 600 MPa. Eine solche Druckspannung wird insbesondere durch ein Vorspannen mittels eines Natriumnitrat-Kaliumnitrat-Gemischs erhalten.

Gemäß einer weiteren Ausführungsform der Erfindung beträgt die Druckspannung maximal 500 MPa, bevorzugt maximal 400 MPa, besonders bevorzugt maximal 300 MPa und ganz besonders bevorzugt maximal 250 MPa. Solche Druckspannungen sind insbesondere durch ein Vorspannen mittels einer reinen Natriumnitratschmelze zu erzielen.

Hierbei ist die Natur des jeweiligen Vorspannungsprozesses in der Regel durch eine Änderung der Zusammensetzung des betrachteten Glases, also beispielsweise der in Rede stehenden Glasscheibe, erkennbar, und zwar an der Oberfläche des Glases, beispielsweise also der Glasscheibe. Sofern beispielsweise das Vorspannen durch Eintauchen in eine Natriumsalzschmelze, beispielsweise eine Natriumnitratschmelze, erfolgt, ist in der Oberfläche des Glases Natrium angereichert, wohingegen die Oberflächenschicht an Lithium, welches gegen Natrium ausgetauscht wird, verarmt ist. Beispielhaft kann diese Verarmung und Anreicherung durch ToF-SIMS-Oberflächenprofile gezeigt werden.

Sofern das Vorspannen in einer Salzschmelze erfolgt, welche ein Gemisch von Kalium- und Natriumsalzen umfasst, so reichert sich die Oberfläche des Glases insbesondere an Kalium an, was ebenfalls mittels ToF-SIMS nachgewiesen werden kann. Weiterhin findet eine Verarmung an Lithium statt.

Gemäß einer weiteren Ausführungsform der Erfindung weist die Druckspannungszone eine Tiefe von mindestens 50 µm, bevorzugt von mindestens 60 µm, besonders bevorzugt von mindestens 70 µm und ganz besonders bevorzugt mindestens 80 µm auf. Eine solche Dicke der Vorspannungs- oder lonenaustauschzone erfolgt bevorzugt durch den Austausch von Lithium gegen Natrium.

Gemäß einer weiteren Ausführungsform der Erfindung ist die zweite Scheibe so ausgestaltet, dass die Druckspannungszone eine Tiefe von mindestens 40 µm Dicke, bevorzugt von mindestens 50 µm Dicke , besonders bevorzugt mindestens 60 µm Dicke, ganz besonders bevorzugt mindestens 70 µm Dicke und am meisten bevorzugt mindestens 80 µm Dicke aufweist, wobei bevorzugt die Oberflächen der zweiten Scheibe im Bereich der Druckspannungszone (oder auch Ionenaustauschzone) im Vergleich zum Inneren der Scheibe, auch als "Bulk" bezeichnet, an Natrium angereichert und an Lithium verarmt sind. Beispielsweise ist eine solche Ausgestaltung der Scheibe realisierbar durch einen Austausch, bei welchem das Salzbad (die Salzschmelze) Natriumnitrat umfasst, insbesondere nur aus Natriumnitrat besteht, sodass die Druckspannungszone (oder Ionenaustauschzone) durch den Austausch Lithium gegen Natrium erhalten wird.

Als Bulk des Glases wird hierbei der Bereich des Glases bezeichnet, welcher grenzflächenfern angeordnet ist, also Grenzflächen- und/oder Oberflächeneffekte, welche beispielsweise in der Änderung der Zusammensetzung und/oder physikalischer Eigenschaften und/oder von Bindungsverhältnissen zwischen den einzelnen Glasbestandteilen bestehen können, außer Betracht bleiben und innerhalb dessen die Zusammensetzung im Wesentlichen der Zusammensetzung entspricht, welche bei einer Analyse des Glases bestimmt wird.

Gemäß einer weiteren bevorzugten Ausführungsform der Erfindung beträgt die Druckspannung an der Oberfläche maximal 550 MPa. Dabei weist die Druckspannungszone eine Tiefe von mindestens 40 µm Dicke, bevorzugt mindestens 50 µm Dicke, besonders bevorzugt mindestens 60 µm Dicke, ganz besonders bevorzugt mindestens 70 µm Dicke und am meisten bevorzugt mindestens 80 µm Dicke auf. Bevorzugt sind die Oberflächen der zweiten Scheibe im Bereich der Druckspannungszone im Vergleich zum Bulk der Scheibe an Natrium angereichert und an Lithium verarmt.

Gemäß einer weiteren Ausführungsform der Erfindung ist die Verbundglasscheibe so gebogen, dass die nach außen weisende Seite der zweiten Scheibe konkav gewölbt ist.

Gemäß einer nochmals weiteren Ausführungsform der Erfindung liegt die Verbundglasscheibe monoaxial verformt vor.

Als monoaxial gebogen wird eine Scheibe im Rahmen der vorliegenden Erfindung beispielsweise dann bezeichnet, wenn die Scheibe lediglich in eine Richtung gebogen vorliegt. Als biaxial gebogen wird eine Scheibe dann bezeichnet, wenn sie in zwei Richtung gebogen vorliegt, beispielsweise in Form einer Schale bzw. einer Kuppel bzw. kuppelartig.

Gemäß einer nochmals weiteren Ausführungsform der Erfindung liegt die Verbundglasscheibe biaxial verformt vor.

Gemäß einer nochmals weiteren Ausführungsform der Erfindung ist mindestens die zweite Scheibe in einem Schmelzprozess mit anschließender Heißformgebung ausgebildet. Die Heißformgebung umfasst einen Ziehprozess, beispielsweise ein sogenanntes Up-Draw-, Down-Draw- oder ein Overflow-Fusion-Verfahren, oder ein Floatverfahren. Gemäß einer bevorzugten Ausführungsform der Erfindung ist die zweite Scheibe eine Floatglasscheibe.

Bevorzugt ist die zweite Scheibe so ausgebildet, dass sie eine lediglich geringe optische Verzerrung aufweist. Die optische Verzerrung einer Glasscheibe ist ein Resultat von über die Breite der Scheibe variierender Dicke, welche sich beispielsweise durch den Ziehprozess, beispielsweise durch leichte Verunreinigungen am Ziehschlitz, oder bei der Abnahme der Glasscheibe vom Zinnbad ergeben. Bestimmt wird die optische Verzerrung einer Glasscheibe beispielsweise an einem sogenannten "Zebra-Board". Beispielhaft ist ein solches Testverfahren in der DIN EN 572-2. Ein beleuchteter Schirm mit einem Raster aus schwarzen und weissen Streifen ("Zebra") wird durch das zu prüfende Glas betrachtet. Dann wird der Winkel zwischen der Glasscheibe und der Tafel langsam geändert vom Ausgangszustand eines Winkels α von 90° (Scheibe senkrecht zum Schirm) in Richtung auf α = 0° (Scheibe parallel zum Schirm) bis die Streifen keine durch das Glas bedingte Verzerrung mehr aufweisen. Bevorzugt beträgt dieser Winkel, der auch als "Zebrawinkel" bezeichnet wird, für die zweite Scheibe größer oder gleich 45°. Die zweite Scheibe weist somit bei einer Dicke von 0,7 mm bevorzugt einen Zebrawinkel von größer oder gleich 45°, vorzugsweise von größer oder gleich 50°, besonders bevorzugt von größer oder gleich 55° auf.

Gemäß einer Ausführungsform der Erfindung weist die zweite Scheibe eine sogenannte Ring-on-Ring-Biegefestigkeit von mehr als 150MPa, insbesondere mehr als 250MPa, bevorzugt mehr als 300MPa, weiterhin bevorzugt mehr als 400MPa, besonders bevorzugt mehr als 500MPa und ganz besonders bevorzugt mehr als 600 MPa und weniger als 900MPa auf. Die Biegefestigkeit ist eine Größe, welche - wie die Festigkeit von Glas allgemein -durch die Stärke der Bindungen zwischen den Glasbestandteilen bestimmt ist und nach theoretischen Berechnungen einen Wert von maximal etwa 29 GPa aufweisen kann. In der Praxis sind diese Werte deutlich geringer, was gemäß der sogenannten Risstheorie auf im gesamten Glas verteilte Risse zurückgeführt wird. Die Ring-on-Ring-Methode zur Bestimmung der Biegefestigkeit ist beschrieben in der DIN EN 1288-5. Für die hier betrachteten Gläser ist das in der vorgenannten Norm beschriebene Verfahren modifiziert. Verwendet werden hier ein Ring mit einem Durchmesser von 3 mm sowie ein zweiter Ring mit einem Durchmesser von 15 mm. Der große Ring ist dabei der Ring, auf welchem die Probe, deren Biegefestigkeit zu bestimmten ist, aufliegt, der kleinere Ring liegt auf der nach oben weisenden Seite der Probe auf und wird nach unten gedrückt.

Gemäß einer weiteren bevorzugten Ausführungsform der Erfindung weist die zweite Scheibe eine kombinierte Vorspannungszone auf. Diese umfasst
- eine Kalium-ausgetauschte Oberflächenschicht mit einer Dicke von weniger als 20 µm, bestimmt von der Glasoberfläche aus, wobei die maximale Druckspannung an der Oberfläche mehr als 500 MPa, bevorzugt mehr als 600 MPa beträgt, sowie
- eine Natrium-ausgetauschte Oberflächenschicht mit einer Dicke von mehr als 40 µm, bevorzugt mehr als 50 µm, besonders bevorzugt mehr als 60 µm, ganz besonders bevorzugt mehr als 70 µm und am meisten bevorzugt mehr als 80 µm, bestimmt von der Glasoberfläche aus, wobei die Spannung lokal im Inneren der rein Natrium-ausgetauschten Oberflächenschicht maximal weniger als 500 MPa, bevorzugt weniger als 400 MPa beträgt.

Abgestellt wird hier hinsichtlich der rein Natrium-ausgetauschten Oberflächenschicht auf die Schicht, in welcher nur Natrium ausgetauscht wurde. Diese Schicht liegt in Richtung der Glasmitte von der Oberfläche des Glases aus unterhalb der Schicht, in welcher der kombinierte Austausch von Kalium und Natrium stattgefunden hat.

Die Maximalspannung in der Kalium-ausgetauschten Oberflächenschicht beträgt maximal 900 MPa. Die Maximalspannung in der Natrium-ausgetauschten Oberflächenschicht kann minimal 50 MPa betragen.

Dies bedeutet, dass in der Oberflächenschicht der zweiten Scheibe - also bis in eine Dicke von weniger als 20 µm (sogenannte Kaliumaustauschzone) - Kalium-Ionen gegen Natrium-Ionen bzw. zum geringen Teil auch Lithium-Ionen ausgetauscht wurden. Weiterhin umfasst die Scheibe eine Natrium-ausgetauschte Oberflächenschicht (sogenannte Natriumaustauschzone), welche sich zumindest teilweise mit der Kalium-ausgetauschten Oberfläche hinsichtlich ihrer Ausdehnung im Glas überschneiden kann. Diese Natrium-ausgetauschte Oberflächenschicht hat eine Dicke von mehr als 40 µm, insbesondere mehr als 50 µm, bevorzugt mehr als 60 µm, besonders bevorzugt mehr als 70µm und ganz besonders bevorzugt mehr als 80 µm. Hier sind die Alkali-Ionen, beispielsweise Lithium-Ionen, zumindest teilweise gegen Natrium-Ionen ausgetauscht.

Gemäß einer nochmals weiteren Ausführungsform der Erfindung umfasst die erste Scheibe ein Kalk-Natron-Glas mit einer Dicke zwischen 1,5 mm und 2,5 mm oder ein Lithium-Aluminium-Silikatglas mit einer Dicke zwischen mindestens 0,3 mm und höchstens 1,5 mm.

Es ist weiterhin möglich, dass, sofern beispielsweise die Verbundglasscheibe gemäß einer Ausführungsform der Erfindung als Verglasung für einen Fahrgastraum, beispielsweise in einem Auto, eingesetzt wird, die zweite Scheibe nach innen, also in den Fahrgastraum hinein, weist. Weiterhin ist es aber auch möglich, dass die zweite Scheibe nach außen weist und die erste Scheiben nach innen, also Richtung Fahrgastraum, angeordnet ist.

Es ist allgemein möglich, dass die erste Scheibe ein Kalk-Natron-Glas umfasst und die zweite Scheibe chemisch vorgespannt vorliegt, wobei die zweite Scheibe eine Dicke der ionenausgetauschten Schicht von mehr als 65 µm aufweist, bevorzugt von mehr als 80 µm. Eine solche Dicke der ionenausgetauschten Schicht kann durch einen lonenaustauschprozess erzeugt werden, in welchem entweder reines Natriumnitrat oder ein Gemisch aus Natriumnitrat und Kaliumnitrat verwendet wird, oder auch in einem zweistufigen Prozess, in welchem der lonenaustausch zunächst mit reinem Natriumnitrat und anschließend mit reinem Kaliumnitrat vorgenommen wird.

Sofern die erste Scheibe ein Lithium-Aluminium-Silikatglas umfasst, kann dieses so ausgebildet sein, dass es im Wesentlichen dieselbe Zusammensetzung aufweist wie die zweite Scheibe. Allerdings sind selbstverständlich auch von der Zusammensetzung der zweiten Scheibe abweichende Zusammensetzungen möglich.

Als im Wesentlichen dieselbe Zusammensetzung aufweisend werden unterschiedliche Gläser bzw. Scheiben im Sinne der vorliegenden Erfindung dann bezeichnet, wenn die Zusammensetzungen lediglich geringe Unterschiede in der Zusammensetzung aufweisen. Beispielsweise weisen zwei Scheiben im Sinne der vorliegenden Erfindung dieselbe Zusammensetzung auf, wenn sich die Zusammensetzungen lediglich durch technisch bedingte unvermeidliche Produktionsschwankungen unterscheiden. Solche Unterschiede liegen in der Regel dann vor, wenn die Gehalte der einzelnen Komponenten sich voneinander jeweils um nicht mehr als 0,2 Prozentpunkte unterscheiden, also beispielsweise die eine Scheibe einen Gehalt an SiO₂ von 75 Gew.-% aufweist und die andere Scheibe eine Gehalt an SiO₂ zwischen 74,8 Gew.-% und 75,2 Gew.-% aufweist.

Insbesondere ist es gemäß einer weiteren Ausführungsform möglich, dass die erste Scheibe ein Kalk-Natron-Glas umfasst. In diesem Fall kann die erste Scheibe im Hinblick auf eine Verwendung als Automobilverglasung innen angeordnet sein. Es ist aber auch möglich, dass die erste Scheibe ein Kalk-Natron-Glas umfasst und außen angeordnet ist.

Das Kalk-Natron-Glas liegt insbesondere als nicht chemisch vorgespanntes Glas vor.

Ist die zweite Scheibe so ausgebildet, dass sie eine hohe Druckspannung aufweist bei gleichzeitig großer Dicke der Druckspannungszone, dann ist sie bei einer Verwendung als Fahrzeugverglasung bevorzugt außen angeordnet.

Gemäß der Erfindung ist die zweite Scheibe ein Lithium-Aluminium-Silikatglas mit einem Li₂O-Gehalt von 4,6 Gew.-% bis 5,4 Gew.-% und einem Na₂O-Gehalt von 8,1 Gew.-% bis 9,7 Gew.-% und einem Al₂O₃-Gehalt von 16 Gew.-% bis 20 Gew.-%. Gemäß einer nochmals weiteren Ausführungsform der Erfindung umfasst die erste Scheibe in Lithium-Aluminium-Silikatglas mit einem Li₂O-Gehalt von 4,6 Gew.-% bis 5,4 Gew.-% und einem Na₂O-Gehalt von 8,1 Gew.-% bis 9,7 Gew.-% und einem Al₂O₃-Gehalt von 16 Gew.-% bis 20 Gew.-%.

Gemäß einer weiteren Ausführungsform der Erfindung umfasst die zweite Scheibe folgende Bestandteile:
58 bis 65 Gew.-% SiO₂
16 bis 20 Gew.-% Al₂O₃
0,1 bis 1 Gew.-% B₂O₃
4,6 bis 5,4 Gew.-% Li₂O
8,1 bis 9,7 Gew.-% Na₂O
Gegebenenfalls 0,05 bis 1,0 Gew.-% K₂O
0,2 bis 2,0 Gew.-% GaO
2,5 bis 5,0 Gew.-% ZrO₂

Dabel konnen gegebenentalls ein oder mehrere der Bestandteile SnO₂, CeO₂, P₂O₅ und ZnO zu einem Anteil von insgesamt 0 Gew.-% bis 2,5 Gew.-% umfasst sein.

Ein weiterer bevorzugter Zusammensetzungsbereich fur die zweite Scheibe umfasst:
60 bis 62 Gew.-% SiO₂
17,5 bis 19,5 Gew.-% Al₂O₃
0,5 bis 0,7 GeW.-% B₂O₃
4,8 bis 5,2 GeW.-% LI₂O
8,5 bis 9,5 Gew.-% Na₂O
0,2 bis 0,5 Gew.-% K₂O
0,5 bis 1,2 Gew.-% CaO
3,2 bis 3,8 Gew.-% ZrO₂
Gegebenenfalls können ein oder mehrere der Bestandteile SnO₂, CeO₂, P₂O₅ und ZnO zu einem Anteil von insgesamt 0,25 Gew.-% bis 1,6 Gew.-% umfasst sein.

Ein nochmals weiterer bevorzugter Zusammensetzungsbereich für die zweite Scheibe umfasst: 61 bis 62 Gew.-% SiO₂
17,5 bis 18,5 Gew.-% Al₂O₃
0,5 bis 0,7 Gew.-% B₂O₃
4,9 bis 5,1 Gew.-% Li₂O
8,8 bis 9,3 Gew.-% Na₂O
0,2 bis 0,5 Gew.-% K₂O
0,5 bis 1,2 Gew.-% CaO
3,2 bis 3,8 Gew.-% ZrO₂
Gegebenenfalls können dabei ein oder mehrere der Bestandteile SnO₂, CeO₂, P₂O₅ und ZnO zu einem Anteil von insgesamt 0,5 Gew.-% bis 1,0 Gew.-% umfasst sein.

Erfindungsgemäße Zusammensetzungen für die zweite Scheibe können auch im folgenden Zusammensetzungsbereich in Mol-% liegen, vorausgesetzt, dass sie allen in Anspruch 1 definierten Merkmalen unterliegen, welche die Zusammensetzung der zweiten Scheibe einschränken:

| | |
|---|---|
| 60 bis 70 | SiO₂ |
| 10 bis 13 | Al₂O₃ |
| 0,0 bis 0,9 | B₂O₃ |
| 9,6 bis 11,6 | Li₂O |
| 8,2 bis kleiner 10 | Na₂O |
| 0,0 bis 0,7 | K₂O |
| 0,0 bis 0,2 | MgO |
| 0,2 bis 2,3 | CaO |
| 0,0 bis 0,4 | ZnO |
| 1,3 bis 2,6 | ZrO₂ |
| 0,0 bis 0,5 | P₂O₅ |
| 0,003 bis 0,100 | Fe₂O₃ |
| 0,0 bis 0,3 | SnO₂ |
| 0,004 bis 0,200 | CeO₂ |

Bevorzugt gelten dabei folgende Verhältnisse für die Zusammensetzung des Lithium-Aluminium-Silikatglases:

(Li₂O + Al₂O₃) / (Na₂O + K₂O) > 2,

0,47 < Li₂O / (Li₂O + Na₂O + K₂O) < 0,7

0,8 < CaO + Fe₂O₃ + ZnO + P₂O₅ + B₂O₃ + CeO₂ < 3,

wobei zumindest vier aus den sechs Oxiden von der Glaszusammensetzung umfasst sind.

Weiterhin bevorzugt umfasst dabei das Lithium-Aluminium-Silikatglas eine Glasübergangstemperatur T_{g} von kleiner als 540°C und/oder eine Verarbeitungstemperatur von weniger als 1150°C.

Gemäß einer weiteren Ausführungsform der Erfindung weist die zweite Scheibe bei einer Dicke von 0,7 mm bei 840 nm eine Transmission von mehr als 91,5 %, bei einer Wellenlänge von 560 nm eine Transmission von mehr als 91,5 % und bei 380 nm eine Transmission von mehr als 90 % auf.

Gemäß der Erfindung unterscheiden sich die Temperaturen, bei welchen die Gläser der ersten und der zweiten Scheibe im Viskositätsbereich zwischen 10⁷ dPas und 10¹⁰ dPas die gleichen Viskositätswerte aufweisen, sich bei jeweils gleicher Viskosität nur um maximal 50°C, bevorzugt um maximal 30°C, besonders bevorzugt um maximal 20°C und ganz besonders bevorzugt um maximal 10°C voneinander.

Ein weiterer Aspekt der vorliegenden Erfindung betrifft ein Verfahren zur Herstellung einer Verbundglasscheibe gemäß Anspruch 18. Dabei werden eine erste Scheibe sowie eine zweite Scheibe bereitgestellt. Die zweite Scheibe weist eine Dicke zwischen mindestens 0,3 mm und höchstens 1,5 mm auf und umfasst ein Lithium-Aluminium-Silikatglas. Mittels einer polymerisch ausgebildeten Lage mit einer Dicken zwischen mindestens 0,5 mm und höchstens 1,7 mm werden die erste Scheibe und die zweite Scheibe miteinander verbunden. Dabei sind die Gläser der ersten Scheibe und der zweiten Scheibe so aufeinander abgestimmt, dass sich die Temperatur, bei welchen die Gläser der ersten Scheibe und der zweiten Scheibe im Viskositätsbereich zwischen 10⁷ dPas und 10¹⁰ dPas die gleiche Viskosität aufweisen, voneinander nur um maximal 50°C, bevorzugt um maximal 30°C, besonders bevorzugt um maximal 20°C und ganz besonders bevorzugt um maximal 10°C voneinander unterscheiden.

Gemäß einer weiteren Ausführungsform des Verfahrens liegt die Verbundglasscheibe gebogen vor, beispielsweise monoaxial gebogen oder biaxial gebogen.

Gemäß einer bevorzugten Ausführungsform des Verfahrens werden die erste Scheibe und die zweite Scheibe in demselben Verfahrensschritt oder nacheinander mit denselben Verfahrensparametern gebogen.

Gemäß einer weiteren Ausführungsform der Erfindung liegt die zweite Scheibe vorgespannt, insbesondere chemisch vorgespannt, vor.

Gemäß einer nochmals weiteren Ausführungsform der Erfindung liegt die erste Scheibe vorgespannt, insbesondere chemisch vorgespannt, vor.

### Beschreibung der Zeichnungen

Es zeigen
- Fig. 1 und 2: jeweils eine schematische Darstellung einer Verbundglasscheibe gemäß Ausführungsformen der Erfindung,
- Fig. 3: eine Darstellung des Viskositätsverlaufs über die Temperatur für zwei unterschiedliche Gläser, sowie
- Fig. 4: zwei schematische Darstellungen der Abbildung von Streifenbildern bei Durchsicht durch eine Glasscheibe.

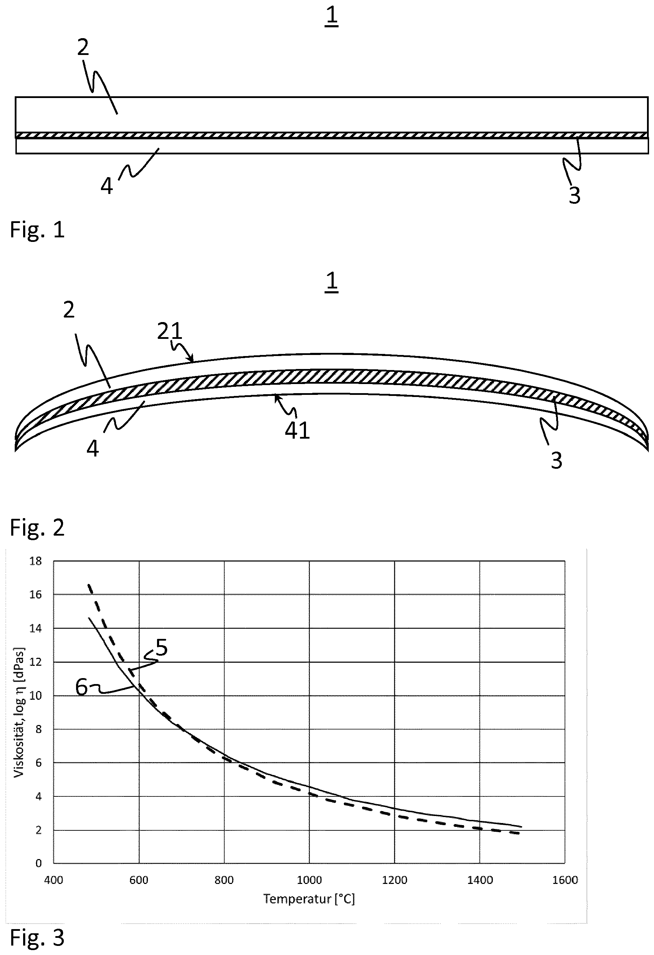

Fig. 1 zeigt schematisch und nicht maßstabsgetreu eine Verbundglasscheibe 1, welche eine erste Scheibe 2 umfasst, eine polymerisch ausgebildete Lage 3, welche zwischen der ersten Scheibe 2 und der zweiten Scheibe 4 angeordnet ist und diese verbindet, sowie schließlich die zweite Scheibe 4.

Allgemein, ohne Beschränkung auf das hier abgebildete Ausführungsbeispiel ist es jedoch auch möglich, dass die Verbundglasscheibe mehr als zwei Scheiben umfasst. Beispielhaft kann dies der Fall sein, wenn besonders hohe mechanische Belastungen erwartet werden und entsprechend eine besonders hohe Festigkeit der Verbundglasscheibe angestrebt sind.

Die polymerisch ausgebildete Lage 3 hat eine Dicke zwischen mindestens 0,5 mm und höchstens 1,7 mm. Sie kann als Folie, beispielsweise als Folie umfassend EVA und/oder Polyvinylbutyral, oder als Lage, welche mehrere Folien umfasst, beziehungsweise als mehrlagige Folie, ausgebildet sein. Es ist aber auch möglich, dass die polymerisch ausgebildete Lage durch Aufbringen von Monomeren auf eine der beiden Scheiben 2, 4 sowie durch Starten einer Polymerisierungsreaktion die polymerisch ausgebildete Lage in situ zu bilden. Auch ist es allgemein möglich, dass die polymerische Lage 3 aus einem Verbund von Folien gebildet ist. Insbesondere können die Folien auch PET und/oder PE umfassen. Bei einer mehrlagigen Folie können die Lagen unterschiedliche Zusammensetzungen und physikalische Eigenschaften aufweisen. Allgemein kann die Folie oder eine Lage einer mehrlagigen Folie eine Low-E bzw. eine sogenannte Solar-Control- Beschichtung aufweisen.

Weiterhin ist in der abgebildeten Ausführungsform die erste Scheibe 2 dicker ausgebildet als die zweite Scheibe 4. Dies ist beispielsweise dann von Vorteil, wenn die erste Scheibe eine geringere intrinsische Festigkeit aufweist als die Scheibe 4, sodass zur Gewährleistung einer insgesamt ausreichenden Festigkeit der Verbundglasscheibe 1 die Dicke der ersten Scheibe 2 entsprechend erhöht wird.

Die zweite Scheibe 4 weist eine Dicke zwischen mindestens 0,3 mm und höchstens 1,5 mm auf.

Die Gläser der ersten und der zweiten Scheibe 2, 4 sind so aufeinander abgestimmt, dass sich die Temperaturen, bei welchen die beiden Gläser der ersten und der zweiten Scheibe im Viskositätsbereich zwischen 10⁷ dPas und 10¹⁰ dPas die gleiche Viskosität aufweisen, voneinander nur um maximal 50°C, bevorzugt um maximal 30°C, besonders bevorzugt um maximal 20°C und ganz besonders bevorzugt um maximal 10°C voneinander unterscheiden.

Gemäß einer weiteren Ausführungsform der Erfindung weist das Lithium-Aluminium-Silikatglas einen E-Modul von zumindest 80 GPa, bevorzugt mindestens 82 GPa, besonders bevorzugt mindestens 84 GPa, auf.

Bevorzugt liegt die zweite Scheibe 4 als chemisch vorgespannte Scheibe vor, bevorzugt als chemisch vorgespannte Scheibe mit einer Druckspannungszone von mindestens 40 µm Dicke, wobei die Druckspannung mindestens 150 MPa und maximal 900 MPa beträgt.

Gemäß einer weiteren Ausführungsform der Erfindung beträgt die Druckspannung maximal 800 MPa, bevorzugt maximal 600 MPa. Eine solche Druckspannung wird insbesondere durch ein Vorspannen mittels eines Natriumnitrat-Kaliumnitrat-Gemischs erhalten.

Gemäß einer weiteren Ausführungsform der Erfindung beträgt die Druckspannung maximal 500 MPa, bevorzugt maximal 400 MPa, besonders bevorzugt maximal 300 MPa und ganz besonders bevorzugt maximal 250 MPa. Solche Druckspannungen sind insbesondere durch ein Vorspannen mittels einer reinen Natriumnitratschmelze zu erzielen.

Hierbei ist die Natur des jeweiligen Vorspannungsprozesses in der Regel durch eine Änderung der Zusammensetzung des betrachteten Glases, also beispielsweise der in Rede stehenden Glasscheibe, erkennbar, und zwar an der Oberfläche des Glases, beispielsweise also der Glasscheibe. Sofern beispielsweise das Vorspannen durch Eintauchen in eine Natriumsalzschmelze, beispielsweise eine Natriumnitratschmelze, erfolgt, ist in der Oberfläche des Glases Natrium angereichert, wohingegen die Oberflächenschicht an Lithium, welches gegen Natrium ausgetauscht wird, verarmt ist. Beispielhaft kann diese Verarmung und Anreicherung durch ToF-SIMS-Oberflächenprofile gezeigt werden.

Sofern das Vorspannen in einer Salzschmelze erfolgt, welche ein Gemisch von Kalium- und Natriumsalzen umfasst, so reichert sich die Oberfläche des Glases mit Natrium und Kalium an, was ebenfalls mittels ToF-SIMS nachgewiesen werden kann. Weiterhin findet eine Verarmung an Lithium statt.

Gemäß einer weiteren Ausführungsform der Erfindung weist die Druckspannungszone eine Tiefe von mindestens 50 µm, bevorzugt von mindestens 60 µm, besonders bevorzugt von mindestens 70 µm und ganz besonders bevorzugt mindestens 80 µm auf. Eine solche Dicke der Vorspannungs- oder lonenaustauschzone erfolgt bevorzugt durch den Austausch von Lithium gegen Natrium.

Gemäß einer weiteren Ausführungsform der Erfindung ist die zweite Scheibe 4 so ausgestaltet, dass die Druckspannungszone eine Tiefe von mindestens 40 µm Dicke, bevorzugt von mindestens 50 µm Dicke, besonders bevorzugt mindestens 60 µm Dicke, ganz besonders bevorzugt mindestens 70 µm Dicke und am meisten bevorzugt mindestens 80 µm Dicke aufweist, wobei bevorzugt die Oberflächen der zweiten Scheibe 4 im Bereich der Druckspannungszone (oder auch Ionenaustauschzone) im Vergleich zum Bulk der Scheibe 4 an Natrium angereichert und an Lithium verarmt sind. Beispielsweise ist eine solche Ausgestaltung der Scheibe 4 realisierbar durch einen Austausch, bei welchem das Salzbad (die Salzschmelze) Natriumnitrat umfasst, insbesondere nur aus Natriumnitrat besteht, sodass die Druckspannungszone (oder Ionenaustauschzone) durch den Austausch Lithium gegen Natrium erhalten wird.

Gemäß einer Ausführungsform der Erfindung liegt die Verbundglasscheibe 1 als gebogene Verbundglasscheibe vor, sodass die nach außen weisende Seite der zweiten Scheibe 2 konkav gewölbt ist.

Bevorzugt ist die zweite Scheibe 4 in einem Schmelzprozess mit anschließender Heißformgebung ausgebildet. Die Heißformgebung umfasst beispielsweise einen Ziehprozess, beispielsweise ein Up-Draw-, ein Down-Draw- oder ein Overflow-Fusion, oder ein Floatverfahren. Es hat sich herausgestellt, dass mittels der genannten Verfahren besonders glatte und ebene Oberflächen für die solcherart hergestellten Glasscheiben erhalten werden. Dies wiederum ist vorteilhaft für eine entsprechend gute Durchsicht durch die Verbundglasscheibe 1 sowie auch für gute mechanische Festigkeitswerte sowohl für die Verbundglasscheibe 1 als auch für die solcherart hergestellte Scheibe, hier beispielhaft die Scheibe 4. Besonders bevorzugt ist die zweite Scheibe 4 ein Floatglas.

Gemäß einer weiteren Ausführungsform der Erfindung weist die zweite Scheibe 4 einen Zebrawinkel von größer oder gleich 45° auf, insbesondere von größer oder gleich 50°, besonders bevorzugt von größer oder gleich 55°, bei einer Dicke von 0,7 mm.

Gemäß einer weiteren Ausführungsform der Erfindung weist die zweite Scheibe 4 eine Ring-on-Ring-Biegefestigkeit von mehr als 150 MPa, insbesondere mehr als 250 MPa, bevorzugt mehr als 300 MPa, weiterhin bevorzugt mehr als 400 MPa, besonders bevorzugt mehr als 500 MPa und ganz besonders bevorzugt mehr als 600 MPa und weniger als 900 MPa auf.

Besonders bevorzugt ist eine Ausführungsform der Verbundglasscheibe 1, bei welchem die zweite Scheibe 4 eine kombinierte Vorspannungszone umfasst. Diese umfasst
- eine Kalium-ausgetauschte Oberflächenschicht mit einer Dicke von weniger als 20 µm, bestimmt von der Glasoberfläche aus, wobei die maximale Druckspannung an der Oberfläche mehr als 500 MPa, bevorzugt mehr als 600 MPa beträgt, sowie
- eine Natrium-ausgetauschte Oberflächenschicht mit einer Dicke von mehr als 40 µm, bevorzugt mehr als 50 µm, besonders bevorzugt mehr als 60 µm, ganz besonders bevorzugt mehr als 70 µm und am meisten bevorzugt mehr als 80 µm, bestimmt von der Glasoberfläche aus, wobei die Spannung lokal im Inneren der rein Natrium-ausgetauschten Oberflächenschicht maximal weniger als 500 MPa, bevorzugt weniger als 400 MPa beträgt.

Die Maximalspannung in der Kalium-ausgetauschten Oberflächenschicht beträgt maximal 900 MPa. Die Maximalspannung in der Natrium-ausgetauschten Oberflächenschicht kann minimal 50 MPa betragen.

Dies bedeutet, dass in der Oberflächenschicht der zweiten Scheibe 4 - also bis in eine Dicke von weniger als 20 µm (sogenannte Kaliumaustauschzone) - Kalium-Ionen gegen Natrium-Ionen bzw. zum geringen Teil auch Lithium-Ionen ausgetauscht wurden. Weiterhin umfasst die Scheibe 4 eine Natrium-ausgetauschte Oberflächenschicht (sogenannte Natriumaustauschzone), welche sich zumindest teilweise mit der Kalium-ausgetauschten Oberfläche hinsichtlich ihrer Ausdehnung im Glas überschneiden kann. Diese Natrium-ausgetauschte Oberflächenschicht hat eine Dicke von mehr als 40 µm, insbesondere mehr als 50 µm, bevorzugt mehr als 60 µm, besonders bevorzugt mehr als 70µm und ganz besonders bevorzugt mehr als 80 µm. Hier sind die Alkali-Ionen, beispielsweise Lithium-Ionen, zumindest teilweise gegen Natrium-Ionen ausgetauscht.

Gemäß einer weiteren Ausführungsform der Erfindung umfasst die erste Scheibe 2 ein Kalk-Natron-Glas mit einer Dicke zwischen 1,5 mm und 2,5 mm oder ein Lithium-Aluminium-Silikatglas mit einer Dicken zwischen mindestens 0,3 mm und höchstens 1,5 mm. Beispielhaft, ohne Beschränkung auf das in Fig. 1 dargestellte Ausführungsbeispiel, ist es daher auch möglich, dass die erste und die zweite Scheibe 2, 4 dieselbe Dicke aufweisen.

Gemäß der Erfindung ist die zweite Scheibe ein Lithium-Aluminium-Silikatglas mit einem Li₂-O-Gehalt von 4,6 Gew.-% bis 5,4 Gew.-% und einem Na₂O-Gehalt von 8,1 Gew.-% bis 9,7 Gew.-% und einem Al₂O₃-Gehalt von 16 Gew.-% bis 20 Gew.-%.

Gemäß einer nochmals weiteren Ausführungsform der Erfindung umfasst die zweite Scheibe 4 folgende Bestandteile:
58 bis 65 Gew.-% SiO₂
16 bis 20 Gew.-% Al₂O₃
U,1 bis 1 Gew.-% B₂O₃
4,6 bis 5,4 Gew.-% Li₂O
8,1 bis 9,7 Gew.-% Na₂O
Gegebenentalls 0,05 bis 1,0 Gew.-% K2U
0,2 bis 2,0 Gew.-% CaO
2,5 bis 5,0 Gew.-% ZrO₂,

Gegebenenfalls Konnen ein oder menrere der Bestandtelle SnO₂, CeO₂, P₂O₅ und ZnO zu einem Antell von insgesamt u Gew.-% bis 2,5 bew.-% umfasst sein.

Bevorzugt umfasst dabel die zweite Scneibe 4 foigende Bestandelle:
60 bis 62 Gew.-% SiO₂
17,5 bis 19,5 Gew.-% Al₂O₃
0,5 bis 0,7 Gew.-% B₂O₃
4,8 bis 5,2 Gew.-% Li₂O
8,5 bis 9,5 Gew.-% Na₂O
0,2 bis 0,5 Gew.-% K₂O
0,5 bis 1,2 Gew.-% CaO
3,2 bis 3,8 Gew.-% ZrO₂
Dabei können gegebenenfalls ein oder mehrere der Bestandteile SnO₂, CeO₂, P₂O₅ und ZnO zu einem Anteil von insgesamt 0,25 Gew.-% bis 1,6 Gew.-% umfasst sein.

Weiterhin bevorzugt umfasst dabei die zweite Scheibe 4 folgende Bestandteile:
61 bis 62 Gew.-% SiO₂
17,5 bis 18,5 Gew.-% Al₂O₃
0,5 bis 0,7 Gew.-% B₂O₃
4,9 bis 5,1 Gew.-% Li₂O
8,8 bis 9,3 Gew.-% Na₂O
0,2 bis 0,5 Gew.-% K₂O
0,5 bis 1,2 Gew.-% CaO
3,2 bis 3,8 Gew.-% ZrO₂
Dabei können gegebenenfalls ein oder mehrere der Bestandteile SnO₂, CeO₂, P₂O₅ und ZnO zu einem Anteil von insgesamt 0,5 Gew.-% bis 1,0 Gew.-% umfasst sein.

Erfindungsgemäße Zusammensetzungen für die zweite Scheibe können auch im folgenden Zusammensetzungsbereich in Mol-% liegen, vorausgesetzt, dass sie allen in Anspruch 1 definierten Merkmalen unterliegen, welche die Zusammensetzung der zweiten Scheibe einschränken:

| | |
|---|---|
| 60 bis 70 | SiO₂ |
| 10 bis 13 | Al₂O₃ |
| 0,0 bis 0,9 | B203 |
| 9,6 bis 11,6 | Li₂O |
| 8,2 bis kleiner 10 | Na₂O |
| 0,0 bis 0,7 | K₂O |
| 0,0 bis 0,2 | MgO |
| 0,2 bis 2,3 | CaO |
| 0,0 bis 0,4 | ZnO |
| 1,3 bis 2,6 | ZrO₂ |
| 0,0 bis 0,5 | P₂O₅ |
| 0,003 bis 0,100 | Fe₂O₃ |
| 0,0 bis 0,3 | SnO₂ |
| 0,004 bis 0,200 | CeO₂ |

Bevorzugt gelten dabei folgende Verhältnisse für die Zusammensetzung des Lithium-Aluminium-Silikatglases:

(Li₂O + Al₂O₃) / (Na₂O + K₂O) > 2,

0,47 < Li₂O / (Li₂O + Na₂O + K₂O) < 0,7

0,8 < CaO + Fe₂O₃ + ZnO + P₂O₅ + B₂O₃ + CeO₂ < 3,

wobei zumindest vier aus den sechs Oxiden von der Glaszusammensetzung umfasst sind.

Weiterhin bevorzugt umfasst dabei das Lithium-Aluminium-Silikatglas eine Glasübergangstemperatur T_{g} von kleiner als 540°C und/oder eine Verarbeitungstemperatur von weniger als 1150°C.

Weiterhin ist die Verbundglasscheibe 1 gemäß einer weiteren Ausführungsform so ausgebildet, dass die zweite Scheibe 4 bei einer Dicke von 0,7 mm und einer Wellenlänge von 840 nm eine Transmission von mehr als 91,5 %, bei einer Wellenlänge von 560 nm von mehr als 91,5 % und bei 380 nm von mehr als 90 % aufweist. Dies ist, wie bereits weiter oben genannt, besonders vorteilhaft für die Realisierung einer guten Durchsicht durch die Scheibe 1, sodass auf diese Weise die Fahrgastsicherheit weiter verbessert wird.

Gemäß der Erfindung ist die Verbundglasscheibe 1 so ausgestaltet, dass die Temperaturen, bei welchen die Gläser der ersten Scheibe 2 und der zweiten Scheibe 4 im Viskositätsbereich zwischen 10⁷ dPas und 10¹⁰ dPas die gleichen Viskositätswerte aufweisen, sich bei jeweils gleicher Viskosität voneinander nur um maximal 50°C, bevorzugt um maximal 30°C, besonders bevorzugt um maximal 20°C und ganz besonders bevorzugt um maximal 10°C voneinander unterscheiden.

Gemäß einer nochmals weiteren Ausführungsform der Erfindung liegt die zweite Scheibe 4 im Wesentlichen durch den Austausch von Lithium-Ionen gegen Natrium-Ionen chemisch vorgespannt vor. Als "im Wesentlichen durch den Austausch von Lithium-Ionen gegen Natrium-Ionen vorgespannt" wird eine Scheibe dann bezeichnet, wenn der wesentlichen Anteil der Vorspannung, also mindestens 80% der erzeugten Vorspannung, auf den Austausch von Lithium-Ionen gegen Natrium-Ionen zurückzuführen ist. Insbesondere ist eine Scheibe dann als im Wesentlichen durch den Austausch von Lithium-Ionen gegen Natrium-Ionen vorgespannt, wenn die Vorspannung ausschließlich durch diesen Austausch erhalten wird.

Ein weiterer Aspekt der vorliegenden Erfindung betrifft ein Verfahren zur Herstellung einer Verbundglasscheibe 1 gemäß Anspruch 18. Dabei werden eine erste Scheibe 2 sowie eine zweite Scheibe 4 bereitgestellt. Die zweite Scheibe weist eine Dicke zwischen mindestens 0,3 mm und höchstens 1,5 mm auf und umfasst ein Lithium-Aluminium-Silikatglas. Mittels einer polymerisch ausgebildeten Lage 3 mit einer Dicke zwischen mindestens 0,5 mm und höchstens 1,7 mm werden die erste Scheibe 2 und die zweite Scheibe 4 miteinander verbunden. Dabei sind die Gläser der ersten Scheibe 2 und der zweiten Scheibe 4 so aufeinander abgestimmt, dass sich die Temperatur, bei welchen die Gläser der ersten Scheibe 2 und der zweiten Scheibe 4 im Viskositätsbereich zwischen 10⁷ dPas und 10¹⁰ dPas die gleiche Viskosität aufweisen, voneinander nur um maximal 50°C, bevorzugt um maximal 30°C, besonders bevorzugt um maximal 20°C und ganz besonders bevorzugt um maximal 10°C voneinander unterscheiden. Gemäß einer weiteren Ausführungsform des Verfahrens liegt die Verbundglasscheibe 1 gebogen vor, beispielsweise monoaxial gebogen oder biaxial gebogen. Als monoaxial gebogen wird eine Scheibe im Rahmen der vorliegenden Erfindung dann bezeichnet, wenn die Scheibe lediglich in eine Richtung gebogen vorliegt. Als biaxial gebogen wird eine Scheibe dann bezeichnet, wenn sie in zwei Richtung gebogen vorliegt, beispielsweise in Form einer Schale bzw. einer Kuppel bzw. kuppelartig.

Gemäß einer bevorzugten Ausführungsform des Verfahrens werden die erste Scheibe 1 und die zweite Scheibe 4 in demselben Verfahrensschritt oder nacheinander mit denselben Verfahrensparametern gebogen.

Fig. 2 zeigt eine weitere Ausführungsform einer Verbundglasscheibe 1. Hierbei ist wiederum eine erste Scheibe 2, eine polymerisch ausgebildete Lage 3 sowie eine zweite Scheibe 4 von der Verbundglasscheibe 1 umfasst. Allerdings ist diesmal die Verbundglasscheibe 1 gewölbt ausgebildet. Dabei ist es möglich, dass sich, wie abgebildet, die Dicke der einzelnen Scheiben 2, 4, sowie die der polymerisch ausgebildeten Lage 3 von der Mitte der Verbundglasscheibe 1 hin zu den Rändern verjüngt. Allerdings ist es auch möglich, dass die Dicke der einzelnen Scheiben 2, 4 sowie auch der polymerisch ausgebildeten Lage 3 jeweils konstant ist oder dass nur einzelne der die Verbundglasscheibe 1 aufbauenden Lagen 2, 3, 4 eine über den Querschnitt der Scheibe 1 variierende Dicke aufweisen. Beispielsweise können eine oder mehrere der Lagen keilförmig ausgebildet vorliegen.

Vorliegend ist die Verbundglasscheibe 1 so ausgebildet, dass die nach außen weisende Oberfläche 41 der zweiten Scheibe 4 konkav gewölbt ist.

Allgemein, ohne Beschränkung auf das hier abgebildete Beispiel, kann die Verbundglasscheibe 1 auch so ausgebildet sein, dass die nach außen weisende Oberfläche 21 der ersten Scheibe 2 konkav gewölbt ist.

Fig. 3 zeigt eine Darstellung des Viskositätsverlaufs für zwei unterschiedliche Gläser 5 und 6. Auf der y-Achse ist der dekadische Logarithmus der Viskosität in dPas aufgetragen, auf der x-Achse die Temperatur in °C. Im für die Herstellung einer Verbundglasscheibe gemäß von Ausführungsformen der Erfindung besonders relevanten Bereich der Viskosität zwischen 10⁷ und 10¹⁰ dPas liegen die Viskositätskurven der beiden Gläser 5 und 6 sehr eng beieinander. Bei den hier beispielhaft ausgewählten Gläsern handelt es sich bei Glas 5 um ein sogenanntes Kalk-Natron-Glas, bei Glas 6 um ein Lithium-Aluminium-Silikatglas.

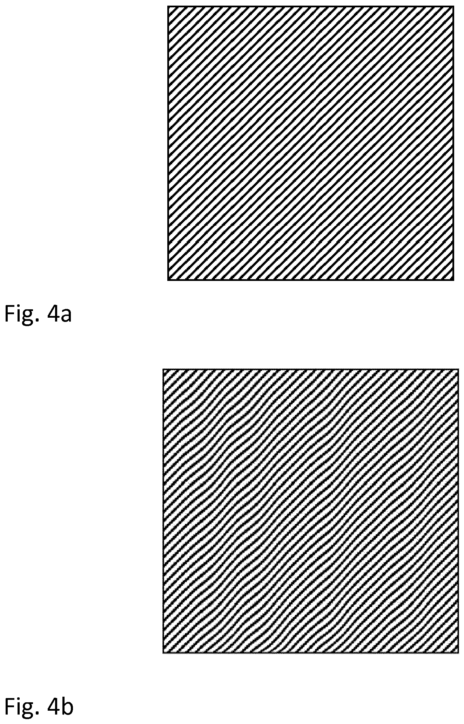

Fig. 4a zeigt schematisch eine Darstellung eines sogenannten "Zebra-Boards" bei Betrachtung durch die - hier nicht abgebildete - Scheibe 4, wobei hier der Winkel zwischen der Scheibe 4 und dem Zebra-Board 0° beträgt, also Scheibe und Board parallel zueinander angeordnet sind und die Blickrichtung durch die Scheibe senkrecht ist.

Allgemein, ohne Beschränkung auf die hier abgebildete Darstellung einer solchen gestreiften Tafel, sind unterschiedliche Ausgestaltungen eines solchen Zebra-Boards möglich. Beispielsweise können die Streifen parallel zur Diagonale des Zebra-Boards verlaufen, wie hier beispielhaft dargestellt. Allerdings sind auch andere Ausgestaltungen möglich, beispielsweise werden insbesondere Tafeln angeboten, bei welchen die Streifen mit einem der das Board begrenzenden Rändern einen Winkel von 30° einschließen.

Bei einer solchen Anordnung, bei welchen die Scheibe 4 und das Streifen- oder Zebra-Board parallel zueinander angeordnet sind, wie das in Fig. 4a der Fall ist, kommt es in der Regel zu keinerlei Verzerrung der Abbildung.

Anders sieht dies aus, wenn zwischen der Scheibe 4 und dem Board ein Winkel angelegt ist. Je nach der Güte der Scheibe - das heißt insbesondere in Abhängigkeit davon, wie stark die Dickenschwankung in der Scheibe ausgeprägt sind - tritt dieser Effekt stärker oder schwächer in Erscheinung. Ein Maß für die Güte der Scheibe ist daher auch der Winkel, ab welchem keine Verzerrung mehr wahrgenommen wird. Beispielhaft ist in Fig. 4b eine Verzerrung des Streifenbildes dargestellt.

### Bezugszeichenliste

- 1: Verbundglas
- 2: erste Scheibe
- 21: nach außen weisende Oberfläche der Scheibe 2
- 3: polymerische Lage
- 4: zweite Scheibe
- 41: nach außen weisende Oberfläche der Scheibe 4

## Patentansprüche

1. Verbundglasscheibe (1), umfassend eine erste Scheibe (2), eine polymerisch ausgebildete Lage (3) mit einer Dicke zwischen mindestens 0,5 mm und höchstens 1,7 mm sowie eine zweite Scheibe (4), welche eine Dicke zwischen mindestens 0,3 mm und höchstens 1,5 mm aufweist und ein Lithium-Aluminium-Silikatglas umfasst, wobei die polymerisch ausgebildete Lage (3) zwischen den mindestens zwei Glasscheiben (2, 4) angeordnet ist und die beiden Scheiben (2, 4) miteinander verbindet, und wobei die Gläser der ersten und der zweiten Scheibe (2, 4) so aufeinander abgestimmt sind, dass sich die Temperaturen, bei welchen die beiden Gläser der ersten und der zweiten Scheibe (2, 4) im Viskositätsbereich zwischen 10⁷ dPas und 10¹⁰ dPas die gleiche Viskosität aufweisen, voneinander nur um maximal 50°C, bevorzugt um maximal 30°C, besonders bevorzugt um maximal 20°C und ganz besonders bevorzugt um maximal 10°C voneinander unterscheiden, wobei die zweite Scheibe (4) ein Lithium-Aluminium-Silikatglas mit einem Li₂O-Gehalt von 4,6 Gew.-% bis 5,4 Gew.-% und einem Na₂O-Gehalt von 8,1 Gew.-% bis 9,7 Gew.-% und einem Al₂O₃-Gehalt von 16 Gew.-% bis 20 Gew.-% ist.

2. Verbundglasscheibe (1) nach Anspruch 1, wobei das Lithium-Aluminium-Silikatglas einen E-Modul von zumindest 80, bevorzugt zumindest 82 GPa, besonders bevorzugt mindestens 84 GPa aufweist.

3. Verbundglasscheibe (1) nach Anspruch 1 oder 2, wobei die zweite Scheibe (4) als chemisch vorgespannte Scheibe vorliegt, bevorzugt als chemisch vorgespannte Scheibe mit einer Druckspannungszone von mindestens 40 µm Dicke, wobei die Druckspannung mindestens 150 MPa und maximal 900 MPa beträgt.

4. Verbundglasscheibe (1) nach Anspruch 3, wobei die Druckspannung maximal 800 MPa, bevorzugt maximal 600 MPa beträgt.

5. Verbundglasscheibe (1) nach Anspruch 3, wobei die Druckspannung maximal 500 MPa, bevorzugt maximal 400 MPa, besonders bevorzugt maximal 300 MPa und ganz besonders bevorzugt maximal 250 MPa beträgt.

6. Verbundglasscheibe (1) nach einem der Ansprüche 3 bis 5, wobei die Druckspannungszone eine Tiefe von mindestens 50 µm, bevorzugt mindestens 60 µm, besonders bevorzugt mindestens 70 µm und ganz besonders bevorzugt mindestens 80 µm aufweist.

7. Verbundglasscheibe (1) nach einem der Ansprüche 3 bis 6, wobei die Druckspannung an der Oberfläche maximal 550MPa beträgt und die Druckspannungszone eine Tiefe von mindestens 40 µm Dicke, bevorzugt mindestens 50 µm Dicke, besonders bevorzugt mindestens 60 µm Dicke, ganz besonders bevorzugt mindestens 70 µm Dicke und am meisten bevorzugt mindestens 80 µm Dicke aufweist und bevorzugt die Oberflächen der zweiten Scheibe im Bereich der Druckspannungszone im Vergleich zum Bulk der Scheibe an Natrium angereichert und an Lithium verarmt sind.

8. Verbundglasscheibe (1) nach einem der vorstehenden Ansprüche, **dadurch gekennzeichnet, dass** die Verbundglasscheibe (1) so gebogen ist, dass die nach außen weisende Seite (41) der zweiten Scheibe (4) konkav gewölbt ist.

9. Verbundglasscheibe (1) nach einem der Ansprüche 1 bis 8, wobei die Verbundglasscheibe (1) monoaxial verformt vorliegt.

10. Verbundglasscheibe (1) nach einem der Ansprüche 1 bis 8, wobei die Verbundglasscheibe (1) biaxial verformt vorliegt.

11. Verbundglasscheibe (1) nach einem der Ansprüche 1 bis 10, wobei die zweite Scheibe (4) eine Floatglasscheibe ist.

12. Verbundglasscheibe (1) nach einem der Ansprüche 1 bis 11, wobei die zweite Scheibe (4) einen Zebrawinkel von größer oder gleich 45°, bevorzugt von größer oder gleich 50°, besonders bevorzugt von größer oder gleich 55° aufweist bei einer Dicke von 0,7mm.

13. Verbundglasscheibe (1) nach einem der der Ansprüche 1 bis 12, wobei die zweite Scheibe (4) eine Ring-on-Ring-Biegefestigkeit von mehr als 150 MPa, insbesondere mehr als 250 MPa, bevorzugt mehr als 300 MPa, weiterhin bevorzugt mehr als 400 MPa, besonders bevorzugt mehr als 500 MPa und ganz besonders bevorzugt mehr als 600 MPa und weniger als 900 MPa aufweist.

14. Verbundglasscheibe (1) nach einem der Ansprüche 1 bis 13, wobei die zweite Scheibe (4) eine kombinierte Vorspannungszone umfasst, welche umfasst
- eine Kalium-ausgetauschte Oberflächenschicht mit einer Dicke von weniger als 20 µm, bestimmt von der Glasoberfläche aus, wobei die maximale Druckspannung an der Oberfläche mehr als 500 MPa, bevorzugt mehr als 600 MPa beträgt, sowie
- eine Natrium-ausgetauschte Oberflächenschicht mit einer Dicke von als 40 µm, bevorzugt mehr als 50 µm besonders bevorzugt mehr als 60 µm, ganz besonders bevorzugt mehr als 70 µm und am meisten bevorzugt mehr als 80 µm, bestimmt von der Glasoberfläche aus, wobei die Spannung lokal im Inneren der rein Natrium-ausgetauschten Oberflächenschicht maximal weniger als 500 MPa, bevorzugt weniger als 400 MPa beträgt.

15. Verbundglasscheibe (1) nach einem der Ansprüche 1 bis 14, wobei die erste Scheibe (2) ein Kalk-Natron-Glas mit einer Dicke zwischen 1,5 mm und 2,5 mm oder ein Lithium-Aluminium-Silikatglas mit einer Dicke zwischen mindestens 0,3 mm und höchstens 1,5 mm umfasst.

16. Verbundglasscheibe (1) nach einem der Ansprüche 1 bis 15, wobei die erste Scheibe (2) ein Lithium-Aluminium-Silikatglas mit einem Li₂O-Gehalt von 4,6 Gew.-% bis 5,4 Gew.-% und einem Na₂O-Gehalt von 8,1 Gew.-% bis 9,7 Gew.-% und einem Al₂O₃-Gehalt von 16 Gew.-% bis 20 Gew.-% umfasst.

17. Verbundglasscheibe (1) nach einem der Ansprüche 1 bis 16, wobei die zweite Scheibe (4) im Wesentlichen durch den Austausch von Lithium-Ionen gegen Natrium-Ionen chemisch vorgespannt vorliegt.

18. Verfahren zur Herstellung einer Verbundglasscheibe (1) gemäß einem der vorstehenden Ansprüche, bei welchem eine erste Scheibe (2) sowie eine zweite Scheibe (4), die eine Dicke zwischen mindestens 0,3 mm und höchstens 1,5 mm aufweist und ein Lithium-Aluminium-Silikatglas umfasst, bereitgestellt und mittels einer polymerisch ausgebildeten Lage (3) mit einer Dicke zwischen mindestens 0,5 mm und höchstens 1,7 mm miteinander verbunden werden, wobei die Gläser so aufeinander abgestimmt sind, dass sich die Temperaturen, bei welchen die beiden Gläser der ersten und der zweiten Scheibe im Viskositätsbereich zwischen 10⁷ dPas und 10¹⁰ dPas die gleiche Viskosität aufweisen, voneinander nur um maximal 50°C, bevorzugt um maximal 30°C, besonders bevorzugt um maximal 20°C und ganz besonders bevorzugt um maximal 10°C voneinander unterscheiden, wobei die zweite Scheibe (4) ein Lithium-Aluminium-Silikatglas mit einem Li₂O-Gehalt von 4,6 Gew.-% bis 5,4 Gew.-% und einem Na₂O-Gehalt von 8,1 Gew.-% bis 9,7 Gew.-% und einem Al₂O₃-Gehalt von 16 Gew.-% bis 20 Gew.-% ist.

19. Verfahren nach Anspruch 18, wobei die Verbundglasscheibe (1) gebogen vorliegt, wobei bevorzugt die erste und die zweite Scheibe (2, 4) in demselben Verfahrensschritt oder nacheinander mit denselben Verfahrensparametern gebogen werden.

20. Verfahren nach einem der Ansprüche 18 oder 19, wobei die zweite Scheibe (4) vorgespannt, insbesondere chemisch vorgespannt, vorliegt.

21. Verfahren nach einem der Ansprüche 18 bis 20, wobei die erste Scheibe (2) vorgespannt, insbesondere chemisch vorgespannt, vorliegt.

## Claims

1. A laminated glass pane (1), comprising a first glass sheet (2), a polymeric layer (3) having a thickness between at least 0.5 mm and at most 1.7 mm, and a second glass sheet (4) having a thickness between at least 0.3 mm and at most 1.5 mm and made of a lithium aluminium silicate glass, wherein the polymeric layer (3) is disposed between the at least two glass sheets (2, 4) bonding the two glass sheets (2, 4) to one another; and
wherein the glasses of the first and second glass sheets (2, 4) are matched so that the temperatures at which the two glasses of the first and second glass sheets (2, 4) have the same viscosity in the viscosity range between 10⁷ dPa·s and 10¹⁰ dPa·s only differ from each other by not more than 50 °C, preferably by not more than 30 °C, more preferably by not more than 20 °C, and most preferably by not more than 10 °C;
wherein the second glass sheet (4) is a lithium aluminium silicate glass with a Li₂O content from 4.6 wt% to 5.4 wt% and an Na₂O content from 8.1 wt% to 9.7 wt% and an Al₂O₃ content from 16 wt% to 20 wt%.

2. The laminated glass pane (1) according to claim 1, wherein the lithium aluminium silicate glass exhibits a Young's modulus of at least 80 GPa, preferably at least 82 GPa, more preferably at least 84 GPa.

3. The laminated glass pane (1) according to claim 1 or 2, wherein the second glass sheet (4) is provided as a chemically toughened glass sheet, preferably as a chemically toughened glass sheet having a compressive stress zone of at least 40 µm thickness with a compressive stress of at least 150 MPa and at most 900 MPa.

4. The laminated glass pane (1) according to claim 3, wherein the compressive stress is at most 800 MPa, preferably at most 600 MPa.

5. The laminated glass pane (1) according to claim 3, wherein the compressive stress is at most 500 MPa, preferably at most 400 MPa, more preferably at most 300 MPa, and most preferably at most 250 MPa.

6. The laminated glass pane (1) according to any one of claims 3 to 5, wherein the compressive stress zone has a depth of at least 50 µm, preferably at least 60 µm, more preferably at least 70 µm, and most preferably at least 80 µm.

7. The laminated glass pane (1) according to any one of claims 3 to 6, wherein the compressive stress at the surface is at most 550 MPa and the compressive stress zone has a depth of at least 40 µm thickness, preferably at least 50 µm thickness, more preferably at least 60 µm thickness, yet more preferably at least 70 µm thickness, and most preferably at least 80 µm thickness, and wherein preferably the surfaces of the second glass sheet are enriched in sodium and depleted of lithium in the region of the compressive stress zone compared to the bulk of the glass sheet.

8. The laminated glass pane (1) according to any one of the preceding claims, **characterised in that** the laminated glass pane (1) is curved such that the outwardly facing side (41) of the second glass sheet (4) is curved concavely.

9. The laminated glass pane (1) according to any one of claims 1 to 8, wherein the laminated glass pane (1) has a uniaxially deformed shape.

10. The laminated glass pane (1) according to any one of claims 1 to 8, wherein the laminated glass pane (1) has a biaxially deformed shape.

11. The laminated glass pane (1) according to any one of claims 1 to 10, wherein the second glass sheet (4) is a float glass sheet.

12. The laminated glass pane (1) according to any one of claims 1 to 11, wherein the second glass sheet (4) has a zebra angle of greater than or equal to 45°, preferably greater than or equal to 50°, most preferably greater than or equal to 55° at a thickness of 0.7 mm.

13. The laminated glass pane (1) according to any one of claims 1 to 12, wherein the second glass sheet (4) exhibits a ring-on-ring bending strength of more than 150 MPa, in particular more than 250 MPa, preferably more than 300 MPa, yet more preferably more than 400 MPa, yet more preferably more than 500 MPa, and most preferably more than 600 MPa, and of less than 900 MPa.

14. The laminated glass pane (1) according to any one of claims 1 to 13, wherein the second glass sheet (4) comprises a combined toughened zone comprising
- a potassium-exchanged surface layer with a thickness of less than 20 µm as determined from the glass surface, with a maximum compressive stress at the surface of more than 500 MPa, preferably more than 600 MPa; and
- a sodium-exchanged surface layer with a thickness of more than 40 µm, preferably more than 50 µm, more preferably more than 60 µm, yet more preferably more than 70 µm, and most preferably more than 80 µm as determined from the glass surface, wherein the maximum local stress in the interior of the purely sodium-exchanged surface layer is less than 500 MPa, preferably less than 400 MPa.

15. The laminated glass pane (1) according to any one of claims 1 to 14, wherein the first glass sheet (2) comprises a soda-lime glass with a thickness between 1.5 mm and 2.5 mm or a lithium aluminium silicate glass with a thickness between at least 0.3 mm and at most 1.5 mm.

16. The laminated glass pane (1) according to any one of claims 1 to 15, wherein the first glass sheet (2) comprises a lithium aluminium silicate glass with a Li₂O content from 4.6 wt% to 5.4 wt% and an Na₂O content from 8.1 wt% to 9.7 wt% and an Al₂O₃ content from 16 wt% to 20 wt%.

17. The laminated glass pane (1) according to any one of claims 1 to 16, wherein the second glass sheet (4) is provided in a chemically toughened form, substantially due to an exchange of lithium ions by sodium ions.

18. A method for producing a laminated glass pane (1) according to any one of the preceding claims, comprising providing a first glass sheet (2) and a second glass sheet (4) having a thickness between at least 0.3 mm and at most 1.5 mm and made of a lithium aluminium silicate glass and bonding them to one another by a polymeric layer (3) having a thickness between at least 0.5 mm and at most 1.7 mm; wherein the glasses are matched so that the temperatures at which the two glasses of the first and second glass sheets have the same viscosity in the viscosity range between 10⁷ dPa·s and 10¹⁰ dPa·s only differ from each other by not more than 50 °C, preferably by not more than 30 °C, more preferably by not more than 20 °C, and most preferably by not more than 10 °C; wherein the second glass sheet (4) is a lithium aluminium silicate glass with a Li₂O content from 4.6 wt% to 5.4 wt% and an Na₂O content from 8.1 wt% to 9.7 wt% and an Al₂O₃ content from 16 wt% to 20 wt%.

19. The method according to claim 18, wherein the laminated glass pane (1) has a curved shape, wherein preferably the first and second glass sheets (2, 4) are bent in the same process step or in succession with the same process parameters.

20. The method according to any one of claims 18 or 19, wherein the second glass sheet (4) is provided in a toughened, in particular chemically toughened form.

21. The method according to any one of claims 18 to 20, wherein the first glass sheet (2) is provided in a toughened, in particular chemically toughened form.

## Revendications

1. Vitrage (1) en verre feuilleté, comprenant une première vitre (2), une couche (3) en polymère, épaisse d'au moins 0,5 mm et d'au plus 1,7 mm, et une deuxième vitre (4), épaisse d'au moins 0,3 mm et d'au plus 1,5 mm et comprenant un verre de silicate de lithium et d'aluminium, dans lequel la couche (3) en polymère est placée entre les vitres (2, 4), au nombre d'au moins deux, et joint l'une à l'autre ces deux vitres (2, 4), dans lequel les verres des première et deuxième vitres (2, 4) sont assortis l'un à l'autre de telle manière que les températures auxquelles ces deux verres des première et deuxième vitres (2, 4) présentent la même viscosité, dans l'intervalle de viscosité allant de 10⁷ à 10¹⁰ dPa.s, ne diffèrent l'une de l'autre que d'au plus 50 °C, de préférence d'au plus 30 °C, mieux encore d'au plus 20 °C et surtout d'au plus 10 °C, et dans lequel la deuxième vitre (4) est en un verre de silicate de lithium et d'aluminium qui présente une teneur en Li₂O de 4,6 à 5,4 % en poids, une teneur en Na₂O de 8,1 à 9,7 % en poids, et une teneur en Al₂O₃ de 16 à 20 % en poids.

2. Vitrage (1) en verre feuilleté, conforme à la revendication 1, dans lequel le verre de silicate de lithium et d'aluminium présente un module E qui vaut au moins 80 GPa, de préférence au moins 82 GPa, et mieux encore au moins 84 GPa.

3. Vitrage (1) en verre feuilleté, conforme à la revendication 1 ou 2, dans lequel la deuxième vitre (4) se trouve dans un état chimiquement précontraint, et de préférence, est une vitre chimiquement précontrainte comportant une zone de contrainte de compression d'au moins 40 µm d'épaisseur, et dans lequel la contrainte de compression vaut au moins 150 MPa et au plus 900 MPa.

4. Vitrage (1) en verre feuilleté, conforme à la revendication 3, dans lequel la contrainte de compression vaut au plus 800 MPa, et de préférence, au plus 600 MPa.

5. Vitrage (1) en verre feuilleté, conforme à la revendication 3, dans lequel la contrainte de compression vaut au plus 500 MPa, de préférence au plus 400 MPa, mieux encore au plus 300 MPa, et surtout au plus 250 MPa.

6. Vitrage (1) en verre feuilleté, conforme à l'une des revendications 3 à 5, dans lequel la zone de contrainte de compression présente une épaisseur d'au moins 50 µm, de préférence d'au moins 60 µm, mieux encore d'au moins 70 µm, et surtout d'au moins 80 µm.

7. Vitrage (1) en verre feuilleté, conforme à l'une des revendications 3 à 6, dans lequel la contrainte de compression à la surface vaut au plus 550 MPa et la zone de contrainte de compression présente une épaisseur d'au moins 40 µm, de préférence d'au moins 50 µm, mieux encore d'au moins 60 µm, surtout d'au moins 70 µm, et au mieux d'au moins 80 µm, et dans lequel, de préférence, les surfaces de la deuxième vitre, dans le domaine de la zone de contrainte de compression, sont enrichies en sodium et appauvries en lithium par rapport à l'intérieur de la vitre.

8. Vitrage (1) en verre feuilleté, conforme à l'une des revendications précédentes, **caractérisé en ce que** le vitrage (1) en verre feuilleté est cintré de telle sorte que la face externe (41) de la deuxième vitre (4) présente une courbure concave.

9. Vitrage (1) en verre feuilleté, conforme à l'une des revendications 1 à 8, lequel vitrage (1) en verre feuilleté a subi une déformation monoaxiale.

10. Vitrage (1) en verre feuilleté, conforme à l'une des revendications 1 à 8, lequel vitrage (1) en verre feuilleté a subi une déformation biaxiale.

11. Vitrage (1) en verre feuilleté, conforme à l'une des revendications 1 à 10, dans lequel la deuxième vitre (4) est une vitre en verre flotté.

12. Vitrage (1) en verre feuilleté, conforme à l'une des revendications 1 à 11, dans lequel la deuxième vitre (4) présente, pour une épaisseur de 0,7 mm, un angle de zébrures supérieur ou égal à 45°, de préférence supérieur ou égal à 50°, et mieux encore supérieur ou égal à 55°.

13. Vitrage (1) en verre feuilleté, conforme à l'une des revendications 1 à 12, dans lequel la deuxième vitre (4) présente une résistance à la flexion, dans l'essai aux deux anneaux superposés, de plus de 150 MPa, en particulier de plus de 250 MPa, de préférence de plus de 300 MPa, mieux encore de plus de 400 MPa, surtout de plus de 500 MPa, et au mieux de plus de 600 MPa, mais de moins de 900 MPa.

14. Vitrage (1) en verre feuilleté, conforme à l'une des revendications 1 à 13, dans lequel la deuxième vitre (4) comporte une zone de précontrainte complexe, qui comprend
- une couche de surface ayant subi un échange avec du potassium, épaisse de moins de 20 µm, définie par la surface de verre où la contrainte de compression maximale à la surface vaut plus de 500 MPa, et de préférence plus de 600 MPa,
- et une couche de surface ayant subi un échange avec du sodium, épaisse de plus de 40 µm, de préférence de plus de 50 µm, mieux encore de plus de 60 µm, surtout de plus de 70 µm, et au mieux de plus de 80 µm, définie par la surface de verre où la contrainte vaut localement, à l'intérieur de la couche de surface ayant purement subi un échange avec du sodium, au maximum moins de 500 MPa, et de préférence moins de 400 MPa.

15. Vitrage (1) en verre feuilleté, conforme à l'une des revendications 1 à 14, dans lequel la première vitre (2) comprend un verre sodo-calcique dont l'épaisseur vaut de 1,5 à 2,5 mm, ou un verre de silicate de lithium et d'aluminium dont l'épaisseur vaut au moins 0,3 mm et au plus 1,5 mm.

16. Vitrage (1) en verre feuilleté, conforme à l'une des revendications 1 à 15, dans lequel la première vitre (2) comprend un verre de silicate de lithium et d'aluminium qui présente une teneur en Li₂O de 4,6 à 5,4 % en poids, une teneur en Na₂O de 8,1 à 9,7 % en poids, et une teneur en Al₂O₃ de 16 à 20 % en poids.

17. Vitrage (1) en verre feuilleté, conforme à l'une des revendications 1 à 16, dans lequel la deuxième vitre (4) se trouve dans un état chimiquement précontraint essentiellement dû à échange d'ions de lithium contre des ions de sodium.

18. Procédé de fabrication d'un vitrage (1) en verre feuilleté, conforme à l'une des revendications précédentes, dans lequel on prépare une première vitre (2), ainsi qu'une deuxième vitre (4), épaisse d'au moins 0,3 mm et d'au plus 1,5 mm et comprenant un verre de silicate de lithium et d'aluminium, et on les joint l'une à l'autre à l'aide d'une couche (3) en polymère, épaisse d'au moins 0,5 mm et d'au plus 1,7 mm, dans lequel les verres sont assortis l'un à l'autre de telle manière que les températures auxquelles ces deux verres des première et deuxième vitres (2, 4) présentent la même viscosité, dans l'intervalle de viscosité allant de 10⁷ à 10¹⁰ dPa.s, ne diffèrent l'une de l'autre que d'au plus 50 °C, de préférence d'au plus 30 °C, mieux encore d'au plus 20 °C et surtout d'au plus 10 °C, et dans lequel la deuxième vitre (4) est en un verre de silicate de lithium et d'aluminium qui présente une teneur en Li₂O de 4,6 à 5,4 % en poids, une teneur en Na₂O de 8,1 à 9,7 % en poids, et une teneur en Al₂O₃ de 16 à 20 % en poids.

19. Procédé conforme à la revendication 18, dans lequel le vitrage (1) en verre feuilleté se trouve courbé, et dans lequel, de préférence, les première et deuxième vitres (2, 4) sont courbées au cours de la même étape de procédé, ou le sont l'une après l'autre avec les mêmes paramètres de procédé.

20. Procédé conforme à la revendication 18 ou 19, dans lequel la deuxième vitre (4) se trouve dans un état précontraint, en particulier chimiquement précontraint.

21. Procédé conforme à l'une des revendications 18 à 20, dans lequel la première vitre (2) se trouve dans un état précontraint, en particulier chimiquement précontraint.
